# EUROPÄISCHE PATENTSCHRIFT

(11) **EP 3 172 513 B1**
(45) Veröffentlichungstag und Bekanntmachung des Hinweises auf die Patenterteilung: **08.09.2021**
(21) Anmeldenummer: 15732283.5
(22) Anmeldetag: 01.07.2015
(51) Int. Cl.: F25D 23/06

(54) **WANDUNG FÜR EIN HAUSHALTSKÄLTEGERÄT, HAUSHALTSKÄLTEGERÄTE SOWIE VERFAHREN ZUM HERSTELLEN EINER WANDUNG**
WALL FOR A HOUSEHOLD REFRIGERATOR, HOUSEHOLD REFRIGERATORS AND A PROCESS FOR PRODUCING A WALL
PAROI POUR UN REFRIGERATEUR DOMESTIQUE, REFRIGERATEURS DOMESTIQUES ET UN PROCÉDÉ POUR PRODUIRE UNE PAROI

(30) Priorität: 21.07.2014 DE 102014214102
(43) Veröffentlichungstag der Anmeldung: 31.05.2017
(73) Patentinhaber: BSH Hausgeräte GmbH, 81739 München (DE)
(72) Erfinder: BAUMANN, Christian, 89567 Sontheim-Brenz (DE); GÖRZ, Alexander, 73432 Aalen (DE); RUMI, Danko, 89077 Ulm (DE); SEELMEIER, Michael, 73572 Heuchlingen (DE)
(86) Internationale Anmeldenummer: PCT/EP2015/064961
(87) Internationale Veröffentlichungsnummer: WO 2016/012208

(56) Entgegenhaltungen:
- WO-A1-2013/084415
- WO-A1-2013/140658
- WO-A1-2014/103753
- DE-A1- 19 907 147
- DE-A1-102009 046 614
- DE-A1-102010 062 734
- DE-A1-102012 223 110
- DE-B- 1 132 567
- DE-T2- 69 508 661
- DE-U1- 8 634 113
- JP-A- 2012 057 838
- JP-A- 2012 107 770
- JP-A- 2013 119 966
- US-A1- 2003 020 385
- US-A1- 2003 219 602

## Beschreibung

Die Erfindung betrifft eine Wandung für ein Haushaltskältegerät, welche zumindest einen thermisch isolierend wirkenden Wandungsbereich aufweist, welcher eine Hülle aufweist, die einen Isolationsraum umgibt bzw. begrenzt. Des Weiteren betrifft die Erfindung ein Haushaltskältegerät mit zumindest einer derartigen Wandung sowie ein Verfahren zum Herstellen einer entsprechenden Wandung.

Es ist bekannt, dass bei einem Haushaltskältegerät zur Aufnahme von Lebensmitteln, wie beispielsweise einem Kühlgerät oder einem Gefriergerät oder einem Kühl-Gefrier-Kombigerät eine Tür zum Verschließen eines Aufnahmeraums, in dem die Lebensmittel zum Konservieren und Lagern eingebracht werden, thermisch isolierend ausgebildet ist. Dazu kann vorgesehen sein, dass die Tür eine Hülle mit einer Außenschale und einer Innenschale aufweist, und in einem Freiraum zwischen der Außenschale und der Innenschale ein thermisch isolierendes Material eingebracht ist. Dieses thermisch isolierende Material kann beispielsweise ein thermisch isolierendes Schaummaterial sein. Es kann jedoch auch vorgesehen sein, dass der Freiraum zwischen der Außenschale und der Innenschale und somit der von der Hülle umgebene Freiraum evakuiert ist. Ebenso ist es möglich, dass diese Tür ein Vakuumisolationselement aufweist, indem ebenfalls eine Hülle einen Freiraum umgibt, in dem ebenfalls ein thermisch isolierendes Material, beispielsweise Kieselsäure, enthalten ist und welcher Freiraum dann auch evakuiert ist.

Darüber hinaus ist üblicherweise vorgesehen, dass an einer im geschlossenen Zustand der Tür dem Aufnahmeraum für die Lebensmittel zugewandten Oberfläche, und somit insbesondere eine Innenseite der Tür, auch sogenannte Türabsteller angeordnet sind. Dies ist jedoch bisher bei Türen vorgesehen, welche eine Hülle mit Hinterlegteilen haben, da dort dann diese erforderliche Tragleisten beziehungsweise Trägerelemente für die Türabsteller angeschraubt werden können. Es ist dabei bekannt, dass diese Tragleisten beispielsweise aus POM (Polyoxymethylen) ausgebildet sind, so dass sie eine hohe Steifigkeit aufweisen. Diese spezifischen Kunststoffleisten können auch so verschraubt werden, dass sie an spezifisch ausgebildeten Hinterlegteilen befestigt werden. Üblicherweise ist der thermisch isolierende Schaum beispielsweise ein PUR (Polyurethan) oder ein expandierter Polystyrolschaum (EPS) oder eine weitere Art von Stoff, dessen Wärmeleitkoeffizient niedrig ist. Das besagte Hinterlegteil ist üblicherweise aus Metall oder einem anderen festen Material, um überhaupt die Schraubverbindungen aufnehmen und stabil halten zu können.

Darüber hinaus sind auch noch andere Wandungen des Haushaltskältegeräts bekannt, bei denen ebenfalls eine thermisch isolierende Wirkung erzeugt wird und welche den Innenraum beziehungsweise den Aufnahmeraum für die Lebensmittel begrenzen. Auch dort können Trägerelemente an der dem Aufnahmeraum zugewandten Innenseite dieser Wandungen angebracht werden, um beispielsweise Fachteile oder dergleichen aufnehmen zu können.

Da sowohl bei den Türen als auch bei den genannten anderen Ausgestaltungen einer Wandung dann relativ große Tragkräfte auftreten, ist eine oben genannte Befestigung von Trägerelementen gerade an derartigen Wandungen, die mit einer Hülle und einem evakuierten Isolationsraum ausgebildet werden, nicht möglich, ohne gegebenenfalls die Hülle beschädigen oder gar durchbohren zu müssen, um die Schraubverbindungen zu befestigen.

Die JP 2012-57838 A offenbart ein Haushaltskältegerät mit einer Hülle, welche einen thermischen Isolationsraum aufweist. Die Hülle weist eine metallische Folie auf, mittels welcher der thermische Isolationsraum abgedichtet ist.

Die WO 2014/103753 A1 offenbart ein Haushaltskältegerät mit einem thermischen Isolationsraum und mit einer Hülle, welche zumindest bereichsweise als mehrlagige Folie ausgebildet ist, wobei mehrere Hüllen über eine Kante miteinander verbunden sind.

Die JP 2013-119966 A offenbart einen thermischen Isolationsraum wobei ein Trägerelement an einer Tür des thermischen Isolationsraums angeordnet ist, ohne dass ein anderes Element die Tür durchdringt.

Es ist Aufgabe der vorliegenden Erfindung, eine Wandung, ein Haushaltskältegerät und ein Verfahren zum Herstellen einer Wandung zu schaffen, bei welcher beziehungsweise bei welchem eine mechanisch stabile Befestigung von Trägerelementen auch gegeben ist, wenn die Wandung einen durch ein Vakuum thermisch isolierend wirkenden Wandbereich aufweist.

Diese Aufgabe wird durch eine Wandung, ein Haushaltskältegerät und ein Verfahren gemäß den unabhängigen Ansprüchen gelöst.

Eine erfindungsgemäße Wandung für ein Haushaltskältegerät umfasst zumindest einen thermisch isolierend wirkenden Wandungsbereich, welcher eine Hülle aufweist, die einen thermischen Isolationsraum umgibt bzw. begrenzt. Ein wesentlicher Gedanke der Erfindung ist darin zu sehen, dass die Hülle zumindest bereichsweise als mehrlagige Folie ausgebildet ist und an einer dem Isolationsraum abgewandten Außenseite der Folie zumindest ein Trägerelement zur Aufnahme eines weiteren Funktionsteils zerstörungsfrei unlösbar befestigt ist. Die Folie ist zumindest 6-lagig ausgebildet und eine dem Trägerelement zugewandte äußere Lage der Folie weist Styrol auf. Durch diese Ausgestaltung wird die Hülle dieses isolierenden Wandungsbereichs ganz spezifisch ausgestaltet und dadurch die thermische Isolationswirkung begünstigt. Darüber hinaus ist durch eine derartige mehrlagige Folie auch eine sehr leichte Hülle geschaffen. Da jedoch gerade ein derartiges Element bezüglich einer Folie relativ empfindlich im Hinblick auf mechanische Einflüsse ist, ist auch die des Weiteren erfindungsgemäße Befestigung des Trägerelements daran vorteilhaft. Indem somit quasi keine Schraubverbindungen oder dergleichen verwendet werden, ist die mechanische Beanspruchung dieser spezifischen Hülle in Form der mehrlagigen Folie nicht beeinträchtigt, so dass weder die Folie beschädigt wird, noch die thermisch isolierende Wirkung beeinträchtigt wird. Durch die zerstörungsfrei unlösbare Befestigung wird dann auch den mechanischen Anforderungen Rechnung getragen und das Trägerelement dauerhaft positionsstabil angeordnet.

Dass eine dem Trägerelement zugewandte äußere Lage der Folie Styrol aufweist ist im Hinblick auf die Diffusionseigenschaften und somit die thermische Isolationswirkung vorteilhaft. Dabei kann die Lage aus ABS (Acrylnitril-Butadien-Styrol) oder ASA (Acrylester-Styrol- Acrylnitril) oder HIPS (High Impact Polystyrene) bzw. SB (Styrol/Butadien) oder Polystyrol ausgebildet sein.
Es ist vorgesehen, dass das Trägerelement an der Außenseite auf der Folie angeschweißt ist. Dies ist eine besonders vorteilhafte Ausführung einer zerstörungsfrei unlösbaren Verbindung. Diese Verbindung kann dauerhaft hochstabil und gerade bei der Verbindung mit Kunststoff auch sehr ortsgenau erzeugt werden.

Es ist vorgesehen, dass die zerstörungsfrei unlösbare Verbindung durch ein Ultraschallschweißen ausgebildet ist. Dies ist gerade bei den genannten Kunststoffpaarungen besonders vorteilhaft, da somit insbesondere keine Beschädigung der mehrlagigen Folie auftritt. Ein Durchdringen der Folie oder ein unerwünscht tiefes Aufschmelzen der Folie kann durch dieses Ultraschallschweißen vermieden werden. Gleichzeitig wird die nötige Festigkeit zum Tragen des Trägerelements und der dann daran angeordneten Funktionsteile, die wiederum Gegenstände aufnehmen können, dauerhaft ermöglicht. Auch kann durch das Ultraschallschweißen eine zerstörungsfrei unlösbare Verbindung, insbesondere zwischen den genannten Kunststoffpaaren erzeugt werden, die den unterschiedlichen Umgebungsbedingungen, die sich bei geschlossener Tür durch entsprechende Kälte einerseits und bei geöffneter Tür durch einen relativ abrupten Wärmeeintrag andererseits ergeben können, standgehalten.

Gerade durch das Ultraschallschweißen kann auch eine zerstörungsfrei unlösbare Verbindung zwischen dem Trägerelement und der Folie erreicht werden, die im Hinblick auf mechanische Beanspruchung einer Schraubverbindung gleichkommt. Darüber hinaus treten beim Ultraschallschweißen mögliche Nachteile, wie sie bei anderen Schweißverfahren vorliegen können, nicht auf. Insbesondere unerwünscht hohe Temperaturen beim Schweißvorgang können somit vermieden werden.

Vorzugsweise ist vorgesehen, dass das Trägerelement zumindest auf der der Folie zugewandten Seite aus Styrol ausgebildet ist, insbesondere aus ABS (Acrylnitril-Butadien-Styrol) oder ASA (Acrylester-Styrol- Acrylnitril) oder HIPS bzw. SB (Styrol/Butadien) oder Polystyrol ausgebildet ist. Es ist dahingehend besonders vorteilhaft, da bei einer zerstörungsfrei unlösbaren Verbindung, insbesondere auf Basis einer Schweißverbindung auf die Materialpaarung, die miteinander verbunden werden soll, geachtet werden muss, um im Hinblick auf die mechanische Stabilität und dauerhafte Aufrechterhaltung der zerstörungsfrei unlösbaren Verbindung ein gleicher oder im Wesentlichen gleicher Schmelzbereich vorliegen sollte und sich darüber hinaus unterschiedliche Materialpaarungen, insbesondere beispielsweise bei einer Ausgestaltung des Trägerelements auf POM und der äußeren Lage der Folie aus Polystyrol auch diffusionstechnisch kaum eine ausreichende Verbindung herstellen lassen würde. Es ist daher gerade bei dieser vorteilhaften Ausführung besonders hervorzuheben, dass das Paarungsmaterial ähnlich dem Polystyrol ist und darüber hinaus auch lebensmittelverträglich ist und in dem Zusammenhang eine entsprechende Zulassung aufweist.

In einer Ausführungsform die nicht unter der vorliegend beanspruchten Erfindung fällt, können alternative Schweißverfahren zum Einsatz kommen wie Vibrationsschweißverfahren, Zirkulationsschweißverfahren, Rotationsschweißverfahren, Laserschweißverfahren sein. Auch ein Heizelementschweißen oder ein Warmgasschweißen oder auch ein Infrarotschweißen kann vorgesehen sein.

Gemäß einer Ausführungsform die nicht unter der vorliegend beanspruchten Erfindung fällt, kann die zerstörungsfrei unlösbare Verbindung beispielsweise auch eine Klebeverbindung sein, wobei hier insbesondere ein UV (Ultraviolett)-aushärtender Kleber oder ein Hotmelt-Kleber oder Klebebänder oder dergleichen vorgesehen sein kann.
Bei dem bereits erwähnten besonders vorteilhaften Erzeugen der zerstörungsfrei unlösbaren Verbindung durch ein Ultraschallschweißen ist insbesondere vorgesehen, dass an der Außenseite der Folie zumindest eine Erhebung als sogenannter Energierichtungsgeber ausgebildet ist. Ein derartiger Energierichtungsgeber ermöglicht eine definierte Berührungsfläche zwischen dem Trägerteil und der äußeren Lage der Folie und ermöglicht so eine gezielte und konzentrierte Energieeinleitung und damit verbunden eine definierte, gleichbleibend kurze Schweißung bei geringem Energiebedarf. Des Weiteren reduziert sich die thermische Schädigung des Kunststoffs auf ein Minimum. Der Effekt der gezielten Energieeinleitung in das Material kann anstatt einem Energierichtungsgeber auch mit einer Sonotrodenfläche bewirkt werden, wenn diese mit einer Struktur, beispielsweise einer Riffelung oder einer Rillierung, versehen ist.

Da bei im Fügeverfahren betreffend das Ultraschallschweißen die dünnsten Stellen als erstes nachgeben und schmelzen, ist es besonders sinnvoll, derartige Stellen vorzugeben, und dann an definierten gewünschten Punkten notwendige Schweißverbindungen zu setzen. Dadurch kann auch die mechanische Stabilität und insbesondere das Ausgestalten von Kraftpfaden optimiert werden und gewünscht gestaltet werden, um dann auch entsprechende Traglasten aufnehmen zu können.
Es kann vorgesehen sein, dass das Trägerelement und/oder die Folie jeweils zumindest einen Energierichtungsgeber aufweisen. Es kann auch vorgesehen sein, dass nur eine der beiden Komponenten zumindest einen Energierichtungsgeber aufweist und die zur Verbindung mit dem Energierichtungsgeber vorgesehene Stelle der anderen Komponente ist beispielsweise eine plane Oberfläche. Es kann auch vorgesehen sein, dass eine der beiden Komponenten auch eine gewisse Aufnahme, beispielsweise eine kleine Tasche aufweist, um eine flächenbündige Ultraschallschweißung zu ermöglichen.

Ein Energierichtungsgeber kann abhängig von der zu erzeugenden Verbindung und/oder abhängig von dem Material der zu verbindenden Komponenten und/oder im Hinblick auf die gewünschten zukünftig aufzunehmenden Traglasten unterschiedliche Höhe und/oder unterschiedliche Geometrien und/oder unterschiedliche Querschnittformen aufweisen. Insbesondere dann, wenn zumindest zwei Energierichtungsgeber vorgesehen sind, kann ein Abstand zwischen diesen auch abhängig von den oben genannten Parametern und Einflussfaktoren sein. Entsprechendes kann auch für die Konturen dieser Energierichtungsgeber dann gelten, wobei sich jeweils bestimmte Varianten für spezifische Einsatzzwecke gegebenenfalls vorteilhaft erweisen.

Vorzugsweise ist vorgesehen, dass ein Energierichtungsgeber eine senkrecht zur Außenseite der Folie bemessene Höhe aufweist, die an der maximalen Stelle kleiner oder gleich 2mm ist. Vorzugsweise beträgt diese maximale Höhe zwischen 0,25mm und 1,25mm. Gerade um eine flächenbündige Schweißung zu ermöglichen ist ein zu hoher Energierichtungsgeber nachteilig, da der Schweißvorgang üblicherweise nicht sehr lange dauert, wodurch das Material gegebenenfalls nicht rechtzeitig wie gewünscht aufschmilzt beziehungsweise verschmilzt.

Ein zu niedrig gewählter Energierichtungsgeber könnte auch wiederum die mehrlagige Folie nachteilig beeinflussen beziehungsweise verletzen, da das Material der Folie oder der Energierichtungsgeber selbst bis an die für die Vakuumisolation wichtigen Schichten schmelzen könnte.

Vorzugsweise ist vorgesehen, dass der Energierichtungsgeber asymmetrisch ausgebildet ist, wobei dies in einer Richtung ausgebildet ist, die zwischen der Folie und dem Trägerelement als Verbindungsrichtung betrachtet ist. Der Energierichtungsgeber kann sich dabei in dieser Richtung verjüngen und insbesondere die Form eines Kegels aufweisen beziehungsweise in einem Querschnitt senkrecht zur Außenseite der Folie eine Dreieckform als Schnittfläche aufweisen. Ein derartig spitz zulaufender Kegel ist in dem Zusammenhang besonders geeignet.

Vorzugsweise ist vorgesehen, dass der Winkel des Kegels zu seiner zentralen Längsachse variabel sein kann. Bevorzugt ist hier ein Winkel zwischen 30° und 120°. Für kleinere Teile sind Winkel zwischen 50° und 90° bevorzugt. Bei größeren Trägerelementen und/oder größeren daran anzubringenden Funktionsteilen ist ein bevorzugter Winkel eines derartigen Energierichtungsgebers in Form eines Kegels größer oder gleich 90°. Es können auch vielfältigste Formen des Energierichtungsgebers, die einen entsprechenden Querschnitt, wie oben erwähnt wurde, aufweisen, vorgesehen sein. Es können in dem Zusammenhang auch ein Ring oder mehrere ineinander geschachtelte und koaxial zueinander angeordnete Ringe vorgesehen sein, die im Querschnitt senkrecht zur Ebene, in der sich die Ringe erstrecken, eine entsprechende dreieckförmige Flächenform aufweisen.

Für eine besonders hohe Anforderung an die Traglast zur Aufnahme von Komponenten an dem Trägerelement und/oder zum Einbringen in ein an dem Trägerelement angeordnetes Funktionsteil ist es bevorzugt, eine entsprechende Kontur zu vervielfachen, beispielsweise zu verdoppeln oder zumindest zu verdreifachen. Dadurch kann die zerstörungsfrei unlösbare Verbindung zwischen dem Trägerelement und der Folie verbessert werden. Dadurch wird auch die Schweißfläche vergrößert.

Bei einem Beispiel, bei welchem der Energierichtungsgeber zumindest einen Kreis aufweist ist ein in sich skalierter, insbesondere verkleinerter Kreis, vorstellbar, wobei die Linien dann parallel und somit koaxial zueinander verlaufen.

Die Form der Energierichtungsgeber sollte vorzugsweise so gestaltet sein, dass durch Aufschmelzen das Material bei einer Energieeinleitung in eine bevorzugte Richtung fließt, um das maximale Potential der Schweißnaht zu erzeugen.

Ein Abstand bei Ausführungen, bei denen ein Energierichtungsgeber beispielsweise zwei konzentrisch ineinander geführte Kreise aufweist, ist zwischen diesen Kreisen als bevorzugt zwischen 0,9mm und 1,1mm, insbesondere 1mm bei einer maximalen Höhe der Kreise von 0,5mm gegeben. Weist ein Energierichtungsgeber eine maximale Höhe von 1mm auf, ist ein Abstand zwischen derartigen mehreren Teilelementen, die Energierichtungsgeber bilden, und beispielsweise konzentrisch Kreise sein können, bevorzugt zwischen 1,4mm und 2,1mm, vorzugsweise zwischen 1,5mm und 2mm.

Vorzugsweise ist vorgesehen, dass zumindest ein Energierichtungsgeber an der in vertikaler Richtung der Wandung betrachteten Stelle zur Erzeugung einer zerstörungsfrei unlösbaren Verbindung zwischen dem Trägerelement und der Folie ausgebildet ist, auf welcher vertikalen Höhe ein Funktionsteil an dem Trägerelement angeordnet ist beziehungsweise angeordnet werden soll. Dadurch werden mechanisch besonders vorteilhafte Ausführungen erreicht, denn beispielsweise eine Hebelwirkung bei der Krafteinleitung, werden dann minimiert und ein sicherer Halt kann dauerhaft erreicht werden.

Vorzugsweise ist vorgesehen, dass das Schweißen derart ausgeführt ist, dass zumindest eine Lage der Folie zur Erzeugen der Verbindung mit dem Trägerelement nicht durchschmolzen ist. Die dadurch erreichbaren Vorteile wurden bereits oben genannt, so dass die thermische Isolationswirkung durch das in dem Isolationsraum erzeugte Vakuum nicht beeinträchtigt wird.

Vorzugsweise ist vorgesehen, dass an der Außenseite der Folie zwei parallel und beabstandet zueinander angeordnete, leistenförmige Trägerelemente zerstörungsfrei unlösbar befestigt sind.

Erfindungsgemäß ist der Isolationsraum ein Vakuum-Isolationsraum, bei welchem somit ein Vakuum zur thermischen Isolationswirkung erzeugt ist. Gerade bei diesen Ausführungen ist das Verschrauben besonders kritisch im Hinblick auf Beschädigung der Folie und somit des Vakuums.
In vorteilhafter Ausführung ist vorgesehen, dass die Wandung eine Tür ist, die zum Verschließen eines Aufnahmeraums des Haushaltskältegeräts angeordnet ist. Bei einer derartigen Ausgestaltung kann dann ein Funktionsteil, welches an dem Trägerelement der Tür angeordnet ist, ein Türabsteller sein. In bevorzugter Ausführung ist vorgesehen, dass die Trägerelemente parallel und beabstandet zueinander angeordnet sind und als Trägerleisten gestaltet sind. Bei derartigen Trägerelementen kann dann vorzugsweise auch vorgesehen sein, dass das Funktionsteil, insbesondere der Türabsteller in Höhenrichtung und somit in vertikaler Richtung an unterschiedlichen Stellen angebracht werden kann und somit eine höhenverstellbare Ausgestaltung realisiert ist.
Wenn die Türabsteller in Mehrzahl an den Trägerelementen angeordnet sind, können diese variabel relativ nahe zueinander angeordnet sein oder mit einem entsprechenden größeren Abstand positioniert sein. Gerade in den Fällen, in denen diese mehreren Türabsteller dann nahe zueinander angeordnet sind und mit relativ großer Last beladen sind, wirkt dort eine relativ hohe Gewichtskraft an örtlich spezifischen Stellen. In dem Zusammenhang können in vertikaler Richtung betrachtet die Abstände relativ klein zwischen den Türabstellern eingestellt werden, die beispielsweise zwischen 110mm und 130mm, insbesondere 120mm betragen können. Bei einer weiteren Ausgestaltung kann vorgesehen sein, dass über die Höhe der Trägerelemente mehrere Türabsteller in gleichen Abständen zueinander verteilt sind, so dass eine zwar lokale sehr große Belastung für die Verbindungsstellen vermieden wird, andererseits jedoch über quasi die gesamte Höhe eine relativ gleichmäßige Verteilung der Kräfte auftritt. Auch hier müssen die Belastungen dann von allen Schweißnähten ausgehalten werden können. Beispielsweise kann bei einer derartigen gleichmäßigen Verteilung ein Abstand zwischen 260mm und 280mm, insbesondere 270mm, zwischen den Türabstellern eingestellt werden. Insbesondere ist auch ein maximaler Abstand zwischen Türabstellern im Bereich zwischen 350mm und 420mm vorgesehen, was beispielsweise dann auftritt, wenn ein Türabsteller zur Aufnahme von Flaschen ausgebildet ist. Vorzugsweise ist vorgesehen, dass im unteren Bereich der Tür, an welcher ein Türabsteller zur Aufnahme von schweren Gegenständen, insbesondere Flaschen, ausgebildet ist, die verstärkte mechanische zerstörungsfrei unlösbare Verbindung zwischen dem Trägerelement und der Folie dahingehend ausgebildet ist, dass eine Mehrzahl von Energierichtungsgebern vorgesehen ist, durch deren Aufschmelzung dann die zerstörungsfrei unlösbaren Verbindungen zwischen den genannten Komponenten erreicht wird. Durch diese Ausgestaltung wird dann auch ein seitliches Verdrehen der Trägerelemente verhindert.

Um darüber hinaus auch einer gegebenenfalls auftretenden Scherspannung entgegenzuwirken, sind außerhalb der Verbindungen, die zerstörungsfrei lösbar ausgebildet sind, die Trägerelemente mit einem geringen Abstand zu einem abgerundeten Seitenrand der mehrlagigen Folie bevorzugt. Dies vermindert auch das Abschälen und ist vorteilhaft zur Vermeidung eines Aufreißens der mehrlagigen Folie.

Es kann auch vorgesehen sein, dass die mehrlagige Folie eine Opferfolie aufweist, die die dem Trägerelement zugewandte äußerste Lage darstellt, die dann beim Schweißprozess zwischen die Sonotrode und die Mehrschichtfolie gelegt wird. Eine bevorzugt vorhandene HIPS-Schicht (High Impact Polystyrene)-Schicht beziehungsweise Lage der mehrlagigen Folie ist bevorzugt mit einer ausreichenden Dicke ausgebildet, um die Barriereschichten beziehungsweise Barrierelagen der mehrlagigen Folie nicht zu beschädigen. Dabei ist vorzugsweise vorgesehen, dass die Energierichtungsgeber nicht so hoch ausgebildet werden, um nicht gegebenenfalls in die Schichten beziehungsweise Lagen, die relevant für die Aufrechterhaltung des Vakuums sind, einzutauchen beziehungsweise zu diffundieren und somit diese zu beschädigen. In vorteilhafter Weise ist vorgesehen, dass das Schweißen von der äußeren Lage beziehungsweise der dem Trägerelement zugewandten äußersten Schicht, die vorzugsweise eine Polystyrol-Schicht ist, aus erfolgt. Insbesondere kann auch vorgesehen sein, dass der Schweißvorgang beim Ultraschallschweißen in einem nahen Feld, bei welchem eine Sonotrodenentfernung kleiner oder gleich 6mm eingestellt wird, die mehrlagige Folie von einer anderen Seite geschweißt wird, so dass die Energierichtungsgeber möglichst nah an der Sonotrode anliegen, wodurch ein kurzer Energieleitweg auftritt. Wird das Schweißen von der gewünschten Sichtseite her und somit von der der Tragleiste beziehungsweise dem Trägerelement zugewandten Außenseite der Folie durchgeführt, so kann vermieden werden, dass der Ultraschall durch die bezüglich der Diffusionswirkung wichtigen Schichten der mehrlagigen Folie geleitet wird, so dass diese durch den Ultraschall nicht beschädigt werden können. Darüber hinaus werden dann auch diese Schichten durch einen Anpressdruck, der beim Anlegen der Sonotroden erfolgt, nicht beschädigt.

Zudem ist bevorzugt vorgesehen, dass ein Abstand von den Rändern der thermogeformten mehrlagigen Folie eingestellt werden kann, damit eine ebene Schweißung mit einer plan geformten Sonotrode ermöglicht ist. Das Schweißen auf einen Radius kann bevorzugt in einem Abstand von 1mm erfolgen.

Das Ultraschallschweißen zur Anbringung der Trägerelemente an der mehrlagigen Folie kann vor oder nach dem Erzeugen des Vakuums im Isolationsraum durchgeführt werden. Es kann auch vorgesehen sein, dass die erzeugten Schweißverbindungen, soweit sie dann auch sichtbar sind, durch eine Abdeckung, beispielsweise eine Blende, verdeckt sind.
Die Erfindung betrifft auch ein Haushaltskältegerät mit zumindest einer Wandung nach einem der vorhergehenden Ansprüche.

Vorzugsweise ist die Wandung eine Tür, welche einen Aufnahmeraum für Lebensmittel des Haushaltskältegeräts verschließt und bei welcher die Außenseite der Folie dem Aufnahmeraum zugewandt ist und als zumindest ein Funktionsteil ein Türabsteller an Trägerelementen angeordnet ist, insbesondere höhenverstellbar an den Trägerelementen anbringbar ist.
Bei einem erfindungsgemäßen Verfahren zum Herstellen einer Wandung für ein Haushaltkältegerät, welche mit zumindest einem thermisch isolierend wirkenden Wandungsbereich ausgebildet wird, welcher eine Hülle aufweist, die einen Isolationsraum umgibt, wird erfindungsgemäß
ein Vakuum in dem Isolationsraum erzeugt. Die Hülle wird zumindest bereichsweise als mehrlagige Folie ausgebildet und an einer dem Isolationsraum abgewandten Außenseite der Folie wird zumindest ein Trägerelement zur Aufnahme eines weiteren Funktionsteils zerstörungsfrei unlösbar befestigt, wobei eine dem Trägerelement zugewandte äußere Lage der Folie Styrol aufweisend ausgebildet wird, wobei das Trägerelement an der Außenseite angeschweißt wird und wobei mittels einer Ultraschallschweißverbindung das Funktionsteil zerstörungsfrei unlösbar befestigt wird.

Vorteilhafte Ausführungen der Wandung und des Haushaltskältegeräts sind als vorteilhafte Ausführungen des Verfahrens anzusehen. Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltskältegeräts;
- Fig. 2: eine Tür des Haushaltskältegeräts gemäß Fig. 1 mit Teilkomponenten mit einer Ansicht auf eine dem Aufnahmeraum des Haushaltskältegeräts zugewandten Innenseite;
- Fig. 3: eine vergrößerte perspektivische Darstellung eines Teilausschnitts der Ansicht in Fig. 2;
- Fig. 4: eine Darstellung der Tür gemäß Fig. 2 und Fig. 3 in noch nicht angebrachtem Zustand eines Trägerelements, jedoch mit mehreren beispielhaften Ausgestaltungen von Energierichtungsgebern zum nachfolgenden Ultraschallschweißen;
- Fig. 5: eine Draufsicht auf eine entsprechende Ausgestaltung gemäß Fig. 4 mit einer Mehrzahl von beispielhaften Formgebungen und Ausgestaltungen von Energierichtungsgebern vor dem Durchführen eines Ultraschallschweißens;
- Fig. 6: eine Darstellung der Tür gemäß Fig. 2 und Fig. 3 mit beispielhaft angebrachten Türabstellern als Funktionsteilen an Trägerelementen;
- Fig. 7: eine vergrößerte Darstellung eines Teilausschnitts in Fig. 3; und
- Fig. 8: eine Darstellung eines Teilausschnitts der Tür gemäß Fig. 2, wie in Fig. 3 gezeigt, jedoch mit zusätzlichen Blenden zur teilweisen Abdeckung der Trägerelemente.

In den Fig. werden gleiche oder funktionsgleiche Elemente mit den gleichen Bezugszeichen versehen.

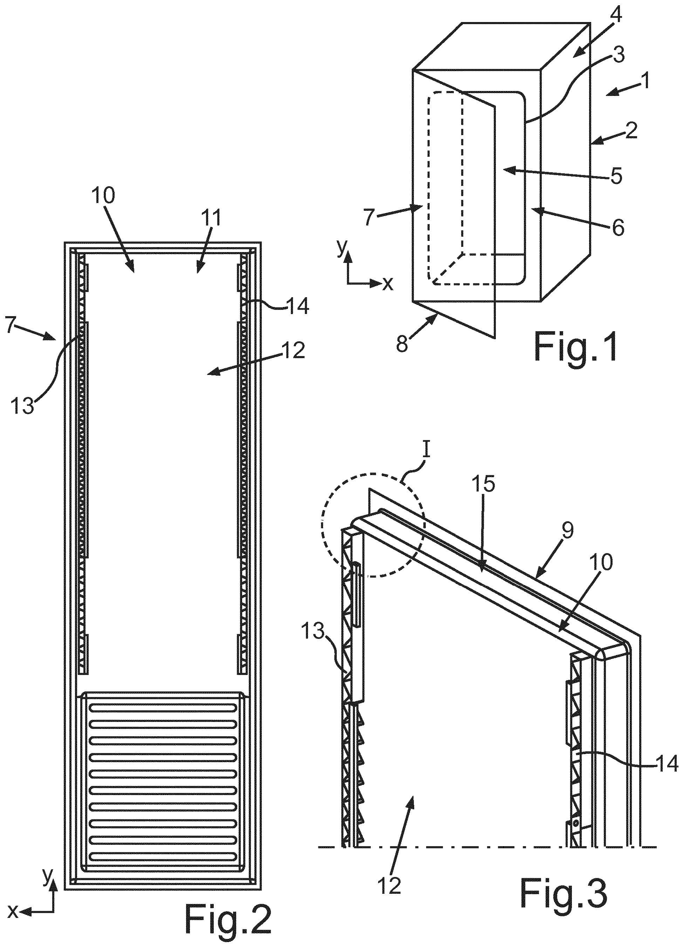

In Fig. 1 ist in einer schematischen perspektivischen Darstellung ein Haushaltskältegerät 1 gezeigt, welches zur Aufnahme von Lebensmitteln ausgebildet ist und beispielsweise ein Kühlgerät oder ein Gefriergerät oder ein Kühl-Gefrier-Kombigerät sein kann. Das Haushaltskältegerät 1 umfasst ein Gehäuse 2, welches einen Innenbehälter 3 und einen Außenbehälter 4 aufweist. In dem Innenbehälter 3 ist mit dessen Wänden ein Aufnahmeraum 5 begrenzt, in dem Lebensmittel zum Lagern und Konservieren eingebracht werden können. Zwischen dem Innenbehälter 3 und dem Außenbehälter 4 ist ein Zwischenraum 6 ausgebildet, der mit einem thermisch isolierenden Material gefüllt ist. Durch den Innenbehälter 3 und den Außenbehälter 4 sowie den Zwischenraum 6 ist eine Wandung gebildet, welche thermisch isolierend wirkt. Durch den Innenbehälter 3 und den Außenbehälter 4 ist in dem Zusammenhang eine Hülle gebildet, welche den Zwischenraum beziehungsweise Freiraum 6 umgibt, in welchem ein thermisch isolierendes Material eingebracht ist und ein Vakuum erzeugt ist. Dadurch wird an den Seitenbereichen und/oder dem Bodenbereich und/oder in dem Deckbereich und/oder dem Rückbereich ein thermisch isolierender beziehungsweise thermisch wirkender Wandungsbereich der jeweiligen Wandung erzeugt.
Darüber hinaus ist eine weitere Wandung des Haushaltskältegeräts 1 durch eine Tür 7 gebildet, die zum Verschließen des Aufnahmeraums 5 ausgebildet ist. Auch die Tür 7 umfasst eine Hülle 8, die eine Außenschale 9 und ein Innenschale 10 aufweist, die miteinander verbunden sind, insbesondere miteinander verschweißt sind. Durch diese beiden Schalen 9 und 10 (Fig. 3) ist ein Freiraum in Form eines Isolationsraums 15 (Fig. 3) begrenzt, in welchem ein Vakuum erzeugt ist und gegebenenfalls auch ein thermisch isolierendes Material enthalten ist, beispielsweise ein Schaum oder Kieselsäure.

In Fig. 2 ist die Tür 7 mit Ansicht auf die Innenschale 10, die im geschlossenen Zustand der Tür 7 den Aufnahmeraum 5 zugewandt ist, gezeigt. Zumindest die Innenschale 10 ist als mehrlagige Folie 11 ausgebildet und sie weist eine Außenseite 12 auf, die im geschlossenen Zustand der Tür 7 dem Aufnahmeraum 5 zugewandt ist. Wie zu erkennen ist, ist auf dieser Außenseite 12 eine erste Leiste als erstes Trägerelement 13 und eine zweite Leiste als zweites Trägerelement 14 befestigt. Die beiden Leisten 13 und 14 sind beabstandet und parallel zueinander angeordnet und erstrecken sich in vertikaler Richtung und somit in y-Richtung. Sie sind zerstörungsfrei unlösbar an der Außenseite 12 angebracht. Es ist erfindungsgemäß vorgesehen, dass die zerstörungsfrei unlösbaren Verbindungen zwischen dem Trägerelement 13 und der Außenseite 12 sowie zwischen dem Trägerelement 14 und der Außenseite 12 durch ein Ultraschallschweißen ausgebildet ist.

Die Folie 11 ist, wie bereits erwähnt, als mehrschichtige beziehungsweise mehrlagige Folie ausgebildet, wobei die äußere Lage, die dann auch die Außenseite aufweist, Polystyrol aufweist oder aus Polystyrol ausgebildet ist. Es kann vorgesehen sein, dass eine im Lagenaufbau beziehungsweise Schichtenaufbau dem Isolationsraum 15 abgewandte und somit die Außenseite 12 aufweisende Abschlussschicht als Hochglanz-Polystyrol-Schicht ausgebildet ist und/oder Silberteilchen aufweist.

Es kann vorgesehen sein, dass der Schichtenaufbau zumindest sechs-lagig ausgebildet ist. Ein derartig viellagiger Aufbau ist im Hinblick auf die Schlagfestigkeit besonders vorteilhaft. Darüber hinaus ist durch einen in der Anzahl der Lagen spezifizierten Schichtenaufbau die Diffusionsminderung gegenüber Atmosphärengasen wie Stickstoff, Sauerstoff, Kohlendioxid und Wasserdampf erreicht. Vorzugsweise ist vorgesehen, dass auf die Abschlussschicht nach innen folgend eine erste Trägerschicht, beispielsweise aus Polystyrol, oder ABS oder Polypropylen ausgebildet ist. Auf die erste Trägerschicht im Schichtenaufbau nach innen folgend kann dann eine erste Haftvermittlungsschicht ausgebildet sein, worauf dann im Schichtenaufbau bevorzugt wiederum folgend eine diffusionsdichte Sperrschicht und dann wiederum auf die Sperrschicht folgend eine zweite Haftvermittlungsschicht sowie auf die zweite Haftvermittlungsschicht eine dem Isolationsraum 15 zugewandte zweite Trägerschicht ausgebildet sein kann. Die Sperrschicht kann beispielsweise Ethylen-Vinyl-Alkohol oder Polyvinylidenchlorid aufweisen. Die zweite Trägerschicht kann Polyethylen oder Polypropylen aufweisen.

An den Trägerelementen 13 und 14 können Funktionsteile, beispielsweise Türabsteller, angebracht werden, wobei die Trägerelemente 13 und 14 so ausgebildet sind, dass die Türabsteller höhenverstellbar daran angeordnet sein können.

Vorzugsweise ist vorgesehen, dass die Trägerelemente 13 und 14 zumindest an den Verbindungsstellen mit der Außenseite 12 und somit auch der äußeren Lage der Folie 11 aus Styrol ausgebildet ist, insbesondere aus ABS oder ASA oder SB ausgebildet ist.

Die Trägerelemente 13 und 14 sind vorzugsweise jeweils einstückige Kunststoffbauteile und können jeweils an mehreren, spezifizierten Stellen mit der Außenseite 12 zerstörungsfrei unlösbar verbunden sein.

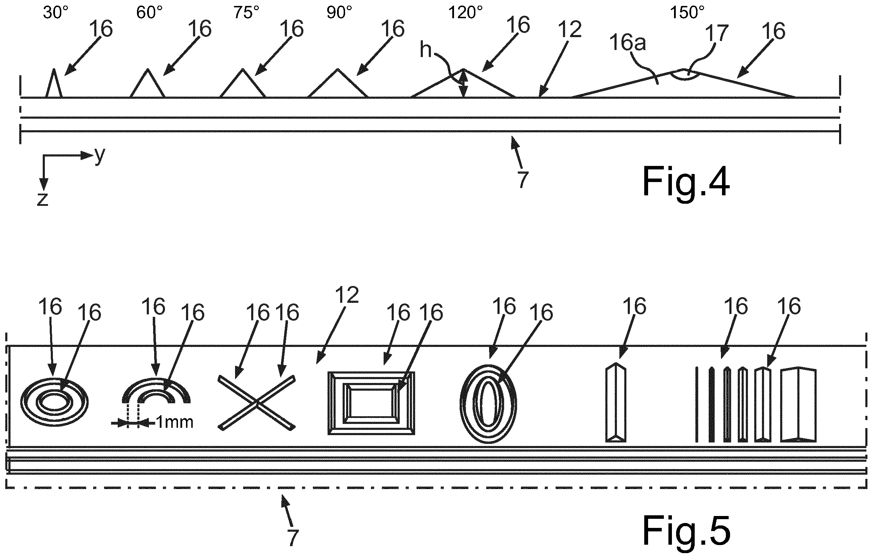

In Fig. 4 ist in einer schematischen Seitenansicht die Tür 7 in einem Fertigungszwischenzustand gezeigt. In diesem sind die Trägerelemente 13 und 14 noch nicht mit der Außenseite 12 verbunden. Für ein erfindungsgemäßes Ultraschallschweißen zur Erzeugung der zerstörungsfrei unlösbaren Verbindung ist an der Außenseite 12 zumindest ein, vorzugsweise mehrere Energierichtungsgeber 16 ausgebildet. Diese sind in ihrer Ausgestaltung und Lage spezifiziert. Im Ausführungsbeispiel sind bevorzugte Formen dahingehend gebildet, dass in einem Querschnitt senkrecht zur Ebene der Außenseite 12 und somit senkrecht zur x-y-Ebene und somit in der y-z-Ebene dreieckförmige Schnittflächen 16 a ausgebildet sind. Bei der in der Darstellung in Fig. 4 ganz rechten Ausgestaltung eines Energierichtungsgebers 16 ist die Dreiecksform so gestaltet, dass der Winkel zwischen den von der Außenseite 12 abstehenden schrägen Dreiecklinien 150° beträgt. In Fig. 4 sind darüber hinaus auch noch beispielhaft weitere entsprechende Ausgestaltungen eines derartigen Energierichtungsgebers 16 gezeigt, bei welchem die Winkel dann beispielsweise 120°, 90°, 75°, 60° oder 30° sein können. Durch Einwirkung des Ultraschallschweißens werden dann gezielt durch die Energierichtungsgeber 16 die Schweißnähte vorgegeben und die zerstörungsfrei unlösbaren Verbindungen durch Aufschmelzen der Materialien erzeugt, so dass dann die Trägerelemente 13 und 14 befestigt sind.
Vorzugsweise weisen die Energierichtungsgeber eine Höhe h zwischen 0,4 mm und 1 mm auf.
In Fig. 5 ist in einer beispielhaften Darstellung die Tür 7 ebenfalls in einem Zwischenmontagezustand gezeigt, bei welchem die Trägerelemente 13 und 14 noch nicht befestigt sind. Hier ist eine Draufsicht auf die Außenseite 12 gezeigt, bei welcher eine Mehrzahl von unterschiedlichen Ausgestaltungen für Energierichtungsgeber 16 dargestellt sind. So ist in dem ganz rechten Ausführungsbeispiel in Fig. 5 eine kaskadierte Anordnung bezüglich der formgleichen Energierichtungsgeber 16 angezeigt, die jedoch immer kleiner bzw. schmäler werden, was der Ausführung in Fig. 4 entspricht.
Bei der dann nach links folgenden dritten Ausgestaltung sind zwei ovale geschlossene Ringe ineinander geführt und beabstandet zueinander angeordnet. Auch sie weisen in der Schnittdarstellung senkrecht zur Außenseite 12 wiederum die dreieckförmigen Querschnittflächen auf. Ein weiteres Ausführungsbeispiel ist dann nachfolgend dahingehend gestaltet, dass zwei Vierecke ineinander kaskadiert ausgebildet sind und diese rahmenartigen Elemente auch wiederum beabstandet zueinander angeordnet sind. Wiederum dann nach links folgend ist ein weiteres Ausführungsbeispiel gezeigt, bei welchem zwei geradlinige Energierichtungsgeber 16 senkrecht zueinander stehen und somit ein Kreuz bilden. Vorzugsweise ist, gemäß der dann wiederum folgenden Darstellung nach links, ein Abstand zwischen zwei Energierichtungsgebern 16 zwischen 0,9 mm und 1,1 mm, vorzugsweise 1mm.

In der ganz linken Darstellung in Fig. 5 ist wiederum eine Anordnung von Energierichtungsgebern 16 gezeigt, die vollständige Kreisringe darstellen, die koaxial zueinander angeordnet sind.

In Fig. 5 ist die gezeigte Mehrzahl von unterschiedlichen möglichen Energierichtungsgebern 16 und deren Anordnung als nur beispielhaft zu verstehen. Es kann situationsabhängig und bedarfsgerecht eine individuelle Anzahl und/oder eine individuelle Formgebung von Energierichtungsgebern 16 vorgesehen sein.

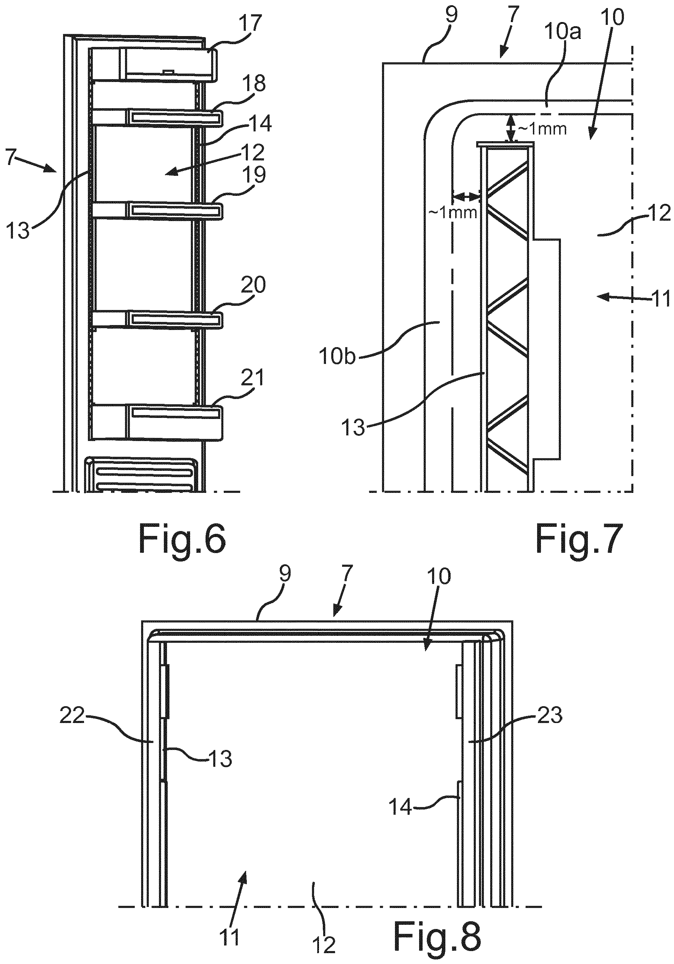

In Fig. 6 ist wiederum die Tür 7 mit Blick auf die Außenseite 12 gezeigt, wobei hier an den Trägerelementen 13 und 14 eine Mehrzahl von Türabstellern 17, 18, 19, 20 und 21 angeordnet ist. Diese können in unterschiedlichen vertikalen Abständen zueinander daran befestigt werden, wobei hier beispielsweise ein Abstand zwischen einem unteren Türabsteller 21 und einem nach oben hin benachbarten unmittelbar folgenden weiteren Türabsteller 20 vorzugsweise zwischen 350mm und 420mm beträgt, so dass im unteren Türabsteller 21 auch problemlos Flaschen eingestellt werden können.

In Fig. 7 ist in einer vergrößerten Darstellung der Ausschnitt I in Fig. 3 gezeigt. Es ist zu erkennen, wie dies auch in Fig. 3 bereits dargestellt ist, dass die Innenschale 10 abgerundete Ränder 10a und 10b aufweist. Wie dazu in Fig. 7 zu erkennen ist, ist das Trägerelementen 13 mit einem gewissen Abstand, vorzugsweise etwa 1mm zu diesem abgerundeten Rändern 10a und 10b beabstandet angeordnet.

In Fig. 8 ist wiederum eine Darstellung entsprechend in Fig. 3 gezeigt, wobei hier zusätzlich Abdeckleisten 22 und 23 angeordnet sind, durch welche die Trägerelemente 13 und 14 zumindest bereichsweise verdeckt werden, insbesondere die Schweißstellen, an denen die zerstörungsfrei unlösbare Verbindung zwischen dem Trägerelement 13 und der Außenseite 12 ausgebildet sind.

### Bezugszeichenliste

- 1: Haushaltskältegerät
- 2: Gehäuse
- 3: Innenbehälter
- 4: Außenbehälter
- 5: Aufnahmeraum
- 6: Zwischenraum
- 7: Tür
- 8: Hülle
- 9: Außenschale
- 10: Innenschale
- 10 a: abgerundeter Rand
- 10 b: abgerundeter Rand
- 11: Folie
- 12: Außenseite
- 13: erstes Trägerelement
- 14: zweites Trägerelement
- 15: Isolationsraum
- 16: Energierichtungsgeber
- 16 a: Schnittflächen
- 17: Türabsteller
- 18: Türabsteller
- 19: Türabsteller
- 20: Türabsteller
- 21: Türabsteller
- 22: Abdeckleiste
- 23: Abdeckleiste

## Patentansprüche

1. Wandung (7) für ein Haushaltskältegerät (1), welche zumindest einen thermisch isolierend wirkenden Wandungsbereich aufweist, welcher eine Hülle (8) aufweist, die einen thermischen Isolationsraum (15) umgibt, wobei die Hülle (8) zumindest bereichsweise als mehrlagige Folie (11) ausgebildet ist und an einer dem Isolationsraum (15) abgewandten Außenseite (12) der Folie (11) zumindest ein Trägerelement (13, 14), welches zur Aufnahme eines weiteren Funktionsteils (17 bis 21) ausgebildet ist, zerstörungsfrei unlösbar befestigt ist, wobei der Isolationsraum ein Vakuum-Isolationsraum ist, in welchem zur thermischen Isolationswirkung der Wandung (7) ein Vakuum erzeugt ist, **dadurch gekennzeichnet, dass** eine dem Trägerelement (13, 14) zugewandte äußere Lage der Folie (11) Styrol aufweist, wobei das Trägerelement (13, 14) an der Außenseite (12) angeschweißt ist und wobei die zerstörungsfrei unlösbare Verbindung eine Ultraschallschweißverbindung ist.

2. Wandung (7) nach Anspruch 1, **dadurch gekennzeichnet, dass** das Trägerelement (13, 14) zumindest auf der der Folie (11) zugewandten Seite aus Styrol ausgebildet ist, insbesondere aus ABS oder ASA oder SB oder Polystyrol ausgebildet ist.

3. Wandung (7) nach einem der vorhergehenden Ansprüche, **dadurch gekennzeichnet, dass** an der Außenseite (12) zumindest eine Erhebung als Energierichtungsgeber (16) ausgebildet ist.

4. Wandung (7) nach einem der vorhergehenden Ansprüche, **dadurch gekennzeichnet, dass** ein Energierichtungsgeber (16) eine senkrecht zur Außenseite (12) bemessene Höhe (h) kleiner oder gleich 2mm, insbesondere zwischen 0,25mm und 1,25mm, aufweist.

5. Wandung (7) nach Anspruch 3 oder 4, **dadurch gekennzeichnet, dass** der Energierichtungsgeber (16) in Richtung zwischen der Folie (11) und dem Trägerelement (13, 14) asymmetrisch ausgebildet ist, insbesondere die Form eines Kegels oder in einem Querschnitt senkrecht zur Außenseite (12) eine Dreieckform als Schnittfläche aufweist.

6. Wandung (7) nach einem der-Ansprüche 3 bis 5, **dadurch gekennzeichnet, dass** zumindest ein Energierichtungsgeber (16) an der in vertikaler Richtung der Wandung (7) betrachteten Stelle zur Erzeugung einer zerstörungsfrei unlösbaren Verbindung zwischen dem Trägerelement (13, 14) und der Folie (11) ausgebildet ist, auf welcher vertikalen Höhe ein Funktionsteil (17 bis 21) an dem Trägerelement (13, 14) angeordnet ist.

7. Wandung (7) nach einem der vorhergehenden Ansprüche, **dadurch gekennzeichnet, dass** an der Außenseite (12) zwei parallel und beabstandet zueinander angeordnete, leistenförmige Trägerelemente (13, 14) zerstörungsfrei unlösbar befestigt sind.

8. Wandung (7) nach einem der vorhergehenden Ansprüche, **dadurch gekennzeichnet, dass** die Wandung eine Tür (7) ist.

9. Haushaltskältegerät (1) mit zumindest einer Wandung (7) nach einem der vorhergehenden Ansprüche.

10. Haushaltskältegerät (1) nach Anspruch 9, **dadurch gekennzeichnet, dass** die Wandung eine Tür (7) ist, welche eine Aufnahmeraum (5) für Lebensmittel des Haushaltskältegeräts (1) verschließt und bei welcher die Außenseite (12) der Folie (11) dem Aufnahmeraum (5) zugewandt ist und als zumindest ein Funktionsteil ein Türabsteller (17 bis 21) an Trägerelementen (13, 14) angeordnet ist, insbesondere höhenverstellbar an den Trägerelementen (13, 14) anbringbar ist.

11. Verfahren zum Herstellen einer Wandung (7) für ein Haushaltkältegerät (1), welche mit zumindest einem thermisch isolierend wirkenden Wandungsbereich ausgebildet wird, welcher eine Hülle (8) aufweist, die einen Isolationsraum (15) umgibt, wobei die Hülle (8) zumindest bereichsweise als mehrlagige Folie (11) ausgebildet wird und an einer dem Isolationsraum (15) abgewandten Außenseite (12) der Folie (11) zumindest ein Trägerelement (13, 14) zur Aufnahme eines weiteren Funktionsteils (17 bis 21) zerstörungsfrei unlösbar befestigt wird, wobei der Isolationsraum als ein Vakuum-Isolationsraum erzeugt wird, in welchem zur thermischen Isolationswirkung der Wandung (7) ein Vakuum erzeugt wird, **dadurch gekennzeichnet, dass** eine dem Trägerelement (13, 14) zugewandte äußere Lage der Folie (11) Styrol aufweisend ausgebildet wird, wobei das Trägerelement (13, 14) an der Außenseite (12) angeschweißt wird und wobei mittels einer Ultraschallschweißverbindung das Trägerelement (13, 14) zerstörungsfrei unlösbar befestigt wird.

## Claims

1. Wall (7) for a household refrigeration appliance (1), which has at least one wall region with a thermally insulating effect, which has a covering (8) that surrounds a thermal insulation space (15), wherein the covering (8) is embodied as a multi-layer film (11), at least in regions, and at least one support element (13, 14), which is embodied for accommodating a further functional part (17 to 21), is fastened such that it cannot be released in a non-destructive manner to an outer side (12) of the film (11) that faces away from the insulation space (15), wherein the insulation space is a vacuum insulation space, in which a vacuum is generated for the thermal insulation effect of the wall (7), **characterised in that** an outer layer of the film (11) that faces towards the support element (13, 14) features styrene, wherein the support element (13, 14) is welded on the outer side (12) and wherein the connection that cannot be released in a non-destructive manner is an ultrasonic welding connection.

2. Wall (7) according to claim 1, **characterised in that** the support element (13, 14) is embodied from styrene at least on the side facing towards the film (11), in particular is embodied from ABS or ASA or SB or polystyrene.

3. Wall (7) according to one of the preceding claims, **characterised in that** at least one elevated area on the outer side (12) is embodied as an energy director (16).

4. Wall (7) according to one of the preceding claims, **characterised in that** an energy director (16) has a height (h), measured perpendicularly to the outer side (12), that is less than or equal to 2mm, in particular between 0.25mm and 1.25mm.

5. Wall (7) according to claim 3 or 4, **characterised in that** the energy director (16), in the direction between the film (11) and the support element (13, 14), is embodied in an asymmetrical manner, in particular has the shape of a cone or, in a cross-section perpendicular to the outer side (12), the shape of a triangle as its intersection.

6. Wall (7) according to one of claims 3 to 5, **characterised in that** at least one energy director (16) is embodied at the point viewed in the vertical direction of the wall (7) for generating a connection that cannot be released in a non-destructive manner between the support element (13, 14) and the film (11), at which vertical height a functional part (17 to 21) is arranged on the support element (13, 14).

7. Wall (7) according to one of the preceding claims, **characterised in that** two bar-shaped support elements (13, 14), which are arranged in parallel with and at a distance from one another, are fastened on the outer side (12) such that they cannot be released in a non-destructive manner.

8. Wall (7) according to one of the preceding claims, **characterised in that** the wall is a door (7).

9. Household refrigeration appliance (1) with at least one wall (7) according to one of the preceding claims.

10. Household refrigeration appliance (1) according to claim 9, **characterised in that** the wall is a door (7), which closes off an accommodating space (5) for foodstuffs of the household refrigeration appliance (1) and in which the outer side (12) of the film (11) is facing towards the accommodating space (5) and a door tray (17 to 21) is arranged on support elements (13, 14) as at least one functional part, in particular is able to be attached to the support elements (13, 14) in a height-adjustable manner.

11. Method for producing a wall (7) for a household refrigeration appliance (1), which is embodied with at least one wall region with a thermally insulating effect, which has a covering (8) that surrounds an insulation space (15), wherein the covering (8) is embodied as a multi-layer film (11), at least in regions, and at least one support element (13, 14), for accommodating a further functional part (17 to 21), is fastened such that it cannot be released in a non-destructive manner to an outer side (12) of the film (11) that faces away from the insulation space (15), wherein the insulation space is generated as a vacuum insulation space, in which a vacuum is generated for the thermal insulation effect of the wall (7), **characterised in that** an outer layer of the film (11) that faces towards the support element (13, 14) is embodied as featuring styrene, wherein the support element (13, 14) is welded on the outer side (12) and wherein the support element (13, 14) is fastened such that it cannot be released in a non-destructive manner by means of an ultrasonic welding connection.

## Revendications

1. Paroi (7) pour un appareil frigorifique ménager (1), laquelle présente au moins une zone de paroi agissant comme un isolant thermique, laquelle présente une enveloppe (8), qui entoure un espace d'isolation thermique (15), dans laquelle l'enveloppe (8) est formée au moins par zones sous la forme d'un film multicouche (11) et au moins un élément de support (13, 14) formé pour accueillir une pièce fonctionnelle (17 à 21) supplémentaire est fixé de façon inamovible sans destruction sur un côté extérieur (12) du film (11) éloigné de l'espace d'isolation (15), dans laquelle l'espace d'isolation est un espace d'isolation par le vide, dans lequel un vide est généré pour l'effet isolant thermique de la paroi (7), **caractérisée en ce qu'**une couche extérieure du film (11) dirigée vers l'élément de support (13, 14) présente du styrène, dans laquelle l'élément de support (13, 14) est soudé sur le côté extérieur (12) et dans laquelle la liaison inamovible sans destruction est une liaison soudée par ultrasons.

2. Paroi (7) selon la revendication 1, **caractérisée en ce que** l'élément de support (13, 14) est formé en styrène, en particulier en ABS, ASA, SB ou polystyrène au moins sur le côté dirigé vers le film (11).

3. Paroi (7) selon l'une des revendications précédentes, **caractérisée en ce qu'**au moins une élévation est formée sous la forme d'un transmetteur de direction d'énergie (16) sur le côté extérieur (12).

4. Paroi (7) selon l'une des revendications précédentes, **caractérisée en ce qu'**un transmetteur de direction d'énergie (16) présente une hauteur (h) mesurée perpendiculairement au côté extérieur (12) inférieure ou égale à 2 mm, en particulier entre 0,25 mm et 1,25 mm.

5. Paroi (7) selon la revendication 3 ou 4, **caractérisée en ce que** le transmetteur de direction d'énergie (16) est formé de façon asymétrique en direction entre le film (11) et l'élément de support (13, 14), en particulier présente la forme d'un cône ou une forme de coupe triangulaire dans une section transversale perpendiculaire au côté extérieur (12).

6. Paroi (7) selon l'une des revendications 3 à 5, **caractérisée en ce qu'**au moins un transmetteur de direction d'énergie (16) est formé en l'endroit vu en direction verticale de la paroi (7) pour la génération d'une liaison inamovible sans destruction entre l'élément de support (13, 14) et le film (11), à la hauteur verticale de laquelle une pièce fonctionnelle (17 à 21) est disposée sur l'élément de support (13, 14).

7. Paroi (7) selon l'une des revendications précédentes, **caractérisée en ce que** deux éléments de support (13, 14) en forme de barre disposés parallèlement et à distance l'un de l'autre sont fixés de façon inamovible sans destruction sur le côté extérieur (12).

8. Paroi (7) selon l'une des revendications précédentes, **caractérisée en ce que** la paroi est une porte (7).

9. Appareil frigorifique ménager (1) avec au moins une paroi (7) selon l'une des revendications précédentes.

10. Appareil frigorifique ménager (1) selon la revendication 9, **caractérisé en ce que** la paroi est une porte (7), qui obture un espace d'accueil (5) pour denrées alimentaires de l'appareil frigorifique ménager (1) et dans laquelle le côté extérieur (12) du film (11) est dirigé vers l'espace d'accueil (5) et un balconnet (17 à 21) est disposé sous la forme d'au moins une pièce fonctionnelle sur les éléments de support (13, 14), pouvant en particulier être apposé de façon réglable en hauteur sur les éléments de support (13, 14).

11. Procédé de fabrication d'une paroi (7) pour un appareil frigorifique ménager (1), formée avec au moins une zone de paroi agissant comme un isolant thermique, laquelle présente une enveloppe (8), qui entoure un espace d'isolation (15), dans lequel l'enveloppe (8) est formée au moins par zones sous la forme d'un film multicouche (11) et au moins un élément de support (13, 14) pour l'accueil d'une pièce fonctionnelle (17 à 21) supplémentaire est fixé de façon inamovible sans destruction sur un côté extérieur (12) du film (11) éloigné de l'espace d'isolation (15), dans lequel l'espace d'isolation est produit sous la forme d'un espace d'isolation par le vide, dans lequel un vide est généré pour l'effet isolant thermique de la paroi (7), **caractérisé en ce qu'**une couche extérieure du film (11) dirigée vers l'élément de support (13, 14) est formée en présentant du styrène, dans lequel l'élément de support (13, 14) est soudé sur le côté extérieur (12) et dans lequel l'élément de support (13, 14) est fixé de façon inamovible sans destruction au moyen d'une liaison soudée par ultrasons.
